Europäisches Patentamt

(19) European Patent Office

Office européen des brevets

(11) Publication number: **0 120 866**
**B1**

(12) **EUROPEAN PATENT SPECIFICATION**

(45) Date of publication of patent specification: 26.11.86

(51) Int. Cl.⁴: **F 16 L 37/24**

(21) Application number: 83901320.8

(22) Date of filing: 10.05.83

(86) International application number:
PCT/AU83/00059

(87) International publication number:
WO 83/04084 24.11.83 Gazette 83/27

(54) HOSE COUPLING.

(30) Priority: 11.05.82 AU 3948/82

(43) Date of publication of application:
10.10.84 Bulletin 84/41

(45) Publication of the grant of the patent:
26.11.86 Bulletin 86/48

(84) Designated Contracting States:
AT BE CH DE FR GB LI LU NL SE

(56) References cited:
AU-D- 6 061
AU-D-1 970 976
AU-D-2 314 829
AU-D-2 747 467
AU-D-2 962 377
AU-D-5 852 660
AU-D-8 588 982
FR-A- 634 976
FR-A- 843 298
GB-A- 137 787
GB-A- 221 948
GB-A-1 446 130
US-A-1 738 996

(73) Proprietor: **Bortolin, Peter**
**4/40 Cannon Street**
**Stanmore New South Wales 2048 (AU)**

(72) Inventor: **Bortolin, Peter**
**4/40 Cannon Street**
**Stanmore New South Wales 2048 (AU)**

(74) Representative: **Jones, Michael Raymond et al**
**HASELTINE LAKE & CO. Hazlitt House**
**28 Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

The present invention relates to hose couplings and more particularly, but not exclusively, to high pressure hose couplings used to join both pneumatic and hydraulic flexible hoses.

It is a disadvantage of some known hose couplings that both a male and a female coupling member are required to join two lengths of hose. This doubles the number of different items to be manufactured, stored, and sold, thereby increasing the cost of the items. Additionally, when two hoses are to be joined, the ends thereof must be of complimentary form if the two hoses are to be connected.

Some couplings have been proposed which overcome the problems set out above, for example as disclosed in FR—A—634,976. However, in general, these known couplings have acquired an "O" ring or such like sealing element to be sandwiched between the two hose couplings, for example, as shown in GB—A—221,928. Hose couplings having sealing elements of this type have the disadvantage that often the sealing element becomes damaged or displaced and a further sealing element is not readily available.

According to the present invention, there is provided a hose coupling, to be fixed to the end of one length of hose to engage an identical further hose coupling to be fixed to the end of another length of hose, comprising a hollow body, through which a passage extends so as to terminate at one end of the body in a first opening and at the other end of the body in a second opening; a spigot, defining the said first opening and having an outer diameter which is such that the said spigot can be fitted into and retained within an end of one of the hoses to be coupled together; a sleeve, defining the said second opening and having an outer diameter which is such that the said sleeve can be fitted within an end of one of the hoses to be coupled together; an annular flange, provided on the said hollow body so as to be co-axial with the said sleeve and surrounding the sleeve so as to define a cavity therebetween; and locking means, for engaging the locking means of the said identical further hose coupling so as to prevent relative axial movement between the two hose couplings when in use; the hose coupling further comprising a sealing element located in the said cavity when the hose coupling is in use, the said sealing element extending to the sleeve of the said identical further hose ocuupling so as to provide a sealed connection between the said lengths of hose when the hose couplings are engaged;

characterised in that the said sealing element is a portion of the or a similar hose which is positioned in the said cavity so as to surround the said sleeves of the two hose couplings when they are engaged, and in that the said annular flange projects longitudinally beyond the said sleeve so as to support the said sealing element when the hose coupling is in use.

GB—A—137,787 discloses a hose coupling comprising a hollow body, having a spigot at one end and a sleeve at the other end, an annular flange, which is co-axial with the sleeve and surrounds it so as to define a cavity therebetween, locking means for engaging the locking means of an identical hose coupling, and a sealing element which extends to the sleeve of the further hose coupling. However, the sealing element used in this prior art hose coupling is a washer ring which is specially constructed for the purpose. GB—A—137,787 does not suggest that a portion of hose could be used as the sealing element nor does the annular flange extend longitudinally beyond the sleeve.

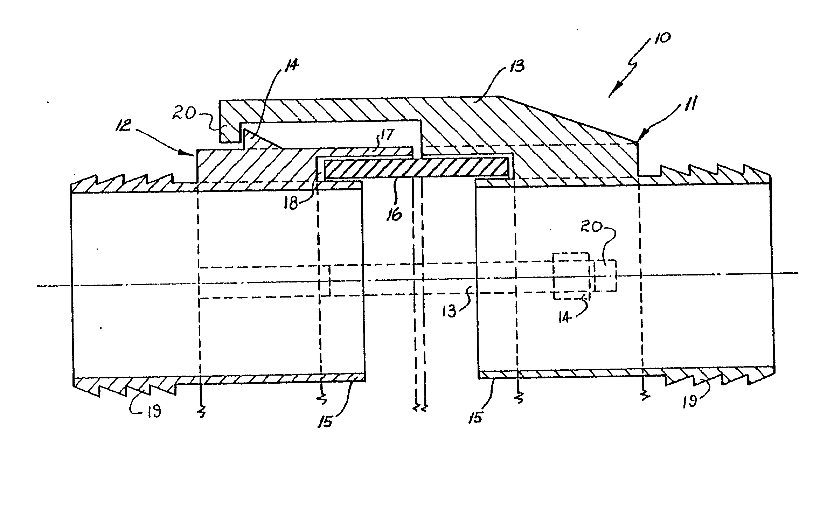

Reference will now be made, by way of example, to the accompanying drawing, which shows a cross-sectional view of hose couplings embodying the present invention.

The accompanying drawing illustrates a joint 10 in a hose, which joint includes two identical hose couplings 11 and 12 which are fixed to the extremities of two lengths of hose to be connected. Each hose coupling 11 and 12 has a barbed spigot 19 having an external diameter to co-operate with the hose lengths so that the hose lengths are retained on the spigot 19. Co-axial with the spigot 19 is a sleeve 15 having an outer diameter appoximately equal to the outer diameter of the spigots 19 so that a portion 16 of the hose may extend between the two sleeves 15 so as to sealingly couple the two couplings 11 and 12. Surrounding the sleeves 15 are two annular flanges 17 against which the hose portion 16 would be biased under the internal pressure of the hose so as to sealingly couple the two hose portions. Accordingly, there is defined by the sleeve 15 and the annular flange 17 an annular cavity 18 which receives an end portion of the hose portion 16.

There is also provided on each hose coupling 11 and 12 a plurality of angularly spaced abutments 14 which are engaged by equally angularly spaced arms 13 which have a step end 20 having an abutment surface to engage the abutments 14 so as to prevent axial movment between the two couplings 11 and 12. In use the couplings 11 and 12 would be rotated relatively in opposite directions about their longitudinal axis so as to bring the abutments 14 into engagement with the arm 13.

It is an advantage of the above-described embodiment of the present invention, that the hose portion 16 may merely be a portion of the hose to be fixed to the spigots 19 and accordingly the availability of a sealing member such as the hose portion 16 is of no problem. Additionally, in use the hose portion 16 would be biased radially upwardly to engage the annular flange 17 to thereby provide a sealed joint.

# Claims

1. A hose coupling, to be fixed to the end of one length of hose to engage an identical further hose coupling to be fixed to the end of another length of hose, comprising a hollow body (11, 12), through which a passage extends so as to terminate at one end of the body in a first opening and at the other end of the body in a second opening; a spigot (19), defining the said first opening and having an outer diameter which is such that the said spigot can be fitted into and retained within an end of one of the hoses to be coupled together; a sleeve (15), defining the said second opening and having an outer diameter which is such that the said sleeve can be fitted within an end of one of the hoses to be coupled together; an annular flange (17), provided on the said hollow body (11, 12) so as to be co-axial with the said sleeve (15) and surrounding the sleeve so as to define a cavity (18) therebetween; and locking means (13, 14), for engaging the locking means (13, 14) of the said identical further hose coupling so as to prevent relative axial movement between the two hose couplings when in use; the hose coupling further comprising a sealing element (16) located in the said cavity (18) when the hose coupling is in use, the said sealing element (16) extending to the sleeve (15) of the said identical further hose coupling so as to provide a sealed connection between the said lengths of hose when the hose couplings are engaged;

characterised in that the said sealing element (16) is a portion of the or a similar hose which is positioned in the said cavity (18) so as to surround the said sleeves (15) of the two hose couplings when they are engaged, and in that the said annular flange (17) projects longitudinally beyond the said sleeve (15) so as to support the said sealing element (16) when the hose coupling is in use.

2. A hose coupling as claimed in claim 1, wherein the said annular flange (17) projects beyond the said sleeve (15) a sufficient distance to abut the annular flange (17) of the said identical further hose coupling when the hose couplings are engaged.

3. A hose coupling as claimed in claim 1 or 2, wherein the said locking means (13, 14) comprise a plurality of angularly spaced abutments (14) provided on the said hollow body (11, 12) and a plurality of longitudinally extending arms (13) provided on the said hollow body (11, 12), the said arms (13) being positioned relative to the said abutments (14) so that in use the said arms (13) engage the abutments (14) of the said identical further hose coupling so as to prevent relative axial movement between the two hose couplings when in use.

**Patentansprüche**

1. Schlauchkupplung, welche an dem Ende eines Schlauchstückes zu befestigen und mit einer am Ende eines anderen Schlauchstückes befestigten identischen Schlauchkupplung in Eingriff zu bringen ist, mit einem Hohlkörper (11, 12), durch welchen sich ein Durchlaß hindurcherstreckt, der an einem ende des Hohlkörpers in einer ersten Öffnung und am anderen Ende des Hohlkörpers in einer zweiten Öffnung endet, mit einem die erste Öffnung begrenzenden Stutzen (19), welcher die erste Öffnung definiert und einen solchen Außendurchmesser besitzt, daß der Stutzen in ein Ende eines der miteinander zu verbindenden Schläuche eingesetzt und darin gehaltert werden kann, mit einer die zweite Öffnung definierenden Hülse (15), welche einen solchen Außendurchmesser besitzt, daß die Hülse in einem Ende eines der miteinander zu kuppelnden Schläuche eingesetzt werden kann, mit einem auf dem Hohlkörper (11, 12) koaxial zur Hülse solcherart umgibt, daß dazwischen eine Höhlung (18) verbleibt, mit einer Verriegelungseinrichtung (13, 14), welche in die Verriegelung (13, 14) der erwähnten identischen weiteren Schlauchkupplung in solcher Weise eingreift, daß eine axiale Relativbewegung zwischen den zwei Schlauchkupplungen im Gebrauch vermieden wird, und mit einem in der Höhlung (18) bei Gebrauch der Schlauchkupplung gelegenen Dichtelement (16), welches sich in die Hülse (15) der erwähnten weiteren identischen Schlauchkupplung solcherart hineinerstreckt, daß sich zwischen den Schlauchstücken bei in Eingriff befindlichen Schlauchkupplungen eine dichte Verbindung ergibt,

dadurch gekennzeichnet, daß das Dichtelement (16) ein Teil des Schlauches oder eines ähnlichen Schlauches ist und dieser Teil in der Höhlung (18) eine solche Lage einnimmt, daß er die Hülsen (15) der zwei miteinander in Eingriff befindlichen Schlauchkupplungen umgibt, und daß sich der Ringflansch (17) in Längsrichtung über die Hülse (15) hinaus erstreckt, so daß das ·Dichtelement (16) bei Gebrauch der Schlauchkupplung abgestützt wird.

2. Schlauchkupplung nach Anspruch 1, worin sich der Ringflansch (17) über die Hülse (15) über einen Abstand hinauserstreckt, der ausreichend ist, um am Ringflansch (17) der erwähnten weiteren Schlauchkupplung bei in Eingriff befindlichen Schlauchkupplungen anzuliegen.

3. Schlauchkupplung nach Anspruch 1 oder 2, worin die Verriegelungen (13, 14) mehrere am Hohlkörper (11, 12) im Winkelabstand angeordnete Anschläge (14) und mehrere am Hohlkörper (11, 12) vorgesehene und sich in Längsrichtung erstreckende Arme (13) aufweisen, wobei die Arme (13) relativ zu den Anschlägen (14) eine solche relative Lage einnehmen, daß im Gebrauch die Arme (13) die Anschläge (14) der erwähnten weiteren identischen Schlauchkupplung in solcher Weise erfassen, daß im Gebrauch eine relative Axialbewegung zwischen den zwei Schlauchkupplungen vermieden wird.

**Revendications**

1. Raccord de tuyaux souples à fixer à l'extrémité d'un tuyau souple pour coopérer avec un autre raccord de tuyau souple identique à fixer à l'extrémité d'un autre tronçon de tuyau souple, comprenant un corps creux (11, 12), à travers lequel s'étend un passage qui se termine à une extrémité du corps en un premier orifice et à l'autre extrémité du corps en un second orifice; un bout mâle (19) définissant le premier orifice et ayant un diamètre extérieur qui est tel que ce bout mâle puisse être adapté dans, et retenu par, une extrémité de l'un des tuyaux souples à accoupler l'un à l'autre; un manchon (15) définissant le second orifice et ayant un diamètre extérieur qui est tel que le manchon puisse être adapté dans une extrémité de l'un des tuyaux souples à accoupler l'un à l'autre; une bride annulaire (17) prévue sur le corps creux (11, 12) en sorte d'être coaxiale avec le manchon (15) et entourant le manchon en sorte de définir entre eux une cavité (18); et des moyens de blocage (13, 14) pour coopérer avec les moyens de blocage (13, 14) du raccord de tuyau souple identique en sorte d'empêcher un mouvement axial relatif entre les deux raccords, en cours d'emploi: le raccord de tuyau souple comprenant encore un élément d'étanchéité (16) situé dans la cavité (18) lorsque le raccord de tuyau souple est en usage, cet élément d'étanchéité (16) s'étendant vers le manchon (15) de l'autre raccord de tuyau souple identique de façon à assurer une liaison étanche entre les tronçons de tuyaux souples lorsque les raccords de tuyaux souples coopèrent,

caractérisé en ce que l'élément d'étanchéité (16) est une partie du tuyau ou d'un tuyau semblable qui est placée dans la cavité (18) de façon à entourer les manchons (15) des deux raccords de tuyaux souples lorsqu'ils coopèrent, et en ce que la bride annulaire (17) s'avance longitudinalement au delà du manchon (15) en sorte de soutenir l'élément d'étanchéité (16) lorsque le raccord de tuyaux souples est en usage.

2. Raccord de tuyaux souples suivant la revendication 1, dans lequel la bride annulaire (17) s'avance au delà du manchon (15) sur une distance suffisante pour venir buter contre la bride annulaire (17) de l'autre raccord de tuyaux souples identique lorsque les raccords de tuyaux souples coopèrent.

3. Raccord de tuyaux souples suivant la revendication 1 ou la revendication 2, dans lequel les moyens de blocage (13, 14) comprennent une multiplicité de butées (14) réparties angulairement prévues sur le corps creux (11, 12) et une multiplicité de bras (13) s'étendant longitudinalement prévus sur le corps creux (11, 12), les bras (13) étant placés par rapport aux butées (14) en sorte qu'en cours d'emploi les bras (13) coopérant avec les butées (14) de l'autre raccord de tuyau souple identique en sorte d'empêcher un mouvement axial relatif entre les deux raccords de tuyaux souples lors de leur emploi.